# EUROPEAN PATENT SPECIFICATION

(11) **EP 1 077 405 B1**
(45) Date of publication and mention of the grant of the patent: **03.06.2009**
(21) Application number: 00306865.7
(22) Date of filing: 10.08.2000
(51) Int. Cl.: G06F 9/44

(54) **Generating a graphical user interface from a command syntax for managing multiple computer systems as one computer system**
Erzeugung einer graphischen Benutzeroberfläche von einer Kommando-Syntax zum Verwalten einer Mehrzahl von Rechnersystemen als ein einziges Rechnersystem
Utilisation d'une syntaxe de commande pour génerer une interface utilisateur graphique pour administrer plusieurs systèmes d'ordinateurs comme un système d'ordinateur unique

(30) Priority: 17.08.1999 US 375602
(43) Date of publication of application: 21.02.2001
(73) Proprietor: International Business Machines Corporation, Armonk, NY 10504 (US)
(72) Inventor: Audleman, Kevin Forbes, Winchester, Hampshire S021 2JN (GB); McBride, Kevin Michael, Winchester, Hampshire S021 2JN (GB); Patterson, Betty Joan, Winchester, Hampshire S021 2JN (GB); Spain, Kelly Ann, Winchester, Hampshire S021 2JN (GB)
(74) Representative: Zerbi, Guido Maria

(56) References cited:
- EP-A- 0 838 768
- EP-A- 0 943 988
- WO-A-99/49390
- BATTLE S A ET AL: "Flexible information presentation with XML" IEE COLLOQUIUM MULTIMEDIA DATABASES AND MPEG-7 (REF. NO.1999/056) IEE LONDON, UK, 29 January 1999 (1999-01-29), pages 13/1-6, XP002323131
- KRISTENSEN ANDERS: "TRiX template resolution framework" HP LAB TECH REP; HP LABORATORIES TECHNICAL REPORT 1998 HEWLETT PACKARD LAB, PALO ALTO, CA, USA, no. 4, 1998, pages 1-16, XP002323132 Retrieved from the Internet: URL:<http://www.hpl.hp.com/techreports/98/ HPL-98-04.pdf> [retrieved on 2005-04-01]

## Description

The present invention generally relates to the management of computer-implemented systems, and in particular, to a system and method for generating a graphical user interface from a command syntax for managing multiple computer systems as one computer system.

The management of computer systems has become increasingly more complex. This results from the complex hardware and software environments found in modern-day computer systems. For example, it is not uncommon to manage a large number of computer systems in a network, wherein the systems perform different tasks and run differing versions of software, wherein the systems are geographically dispersed, and wherein multiple operations consoles are required. As computer systems and networks grow in complexity, so too do the operations consoles and their user interfaces. Yet, it is not desirable to have a separate operations console for each computer system, nor is desirable to maintain a different client interface for each of the operations consoles.

Battle S A et al: "Flexible information presentation with XML" IEE Colloquium Multimedia Databases and Mpeg-7 (REF. NO. 1999/056) IEE London, UK , 29 January 1999, pages 13/1-6, XP002323131 teaches that the task of developing user interfaces can be difficult. It discloses the use of XML as part of the design process.

Accordingly, the invention provides a method for generating a graphical user interface from a command syntax, for managing at least one computer system, comprising:
(a) processing at least one extensible Markup Language (XML) file at a user interface program executed by a computer, wherein the XML file represents a command syntax for managing the at least one computer system; and
(b) generating at least one dialog from the XML file for display to an operator, wherein the at least one dialog is used to create at least one command in the user interface program for managing the at least one computer system.

In a further aspect, a computer program produce is provided comprising computer program code stored on a computer readable storage medium, which when executed on a computer performs the method of the invention.

In a yet further aspect, the invention provides a system for generating a graphical user interface from a command syntax for managing at least one computer system, comprising:
(a) a computer; and
(b) a user interface program, executed by the computer, for processing at least one extensible Markup Language (XML) file at a user interface program executed by a computer, wherein the XML file represents a command syntax for managing the at least one computer system, and for generating at least one dialog from the XML file for display to an operator, wherein the at least one dialog is used to create at least one command in the user interface program for managing the at least one computer system.

Preferably a system is provided that can manage multiple computers and that has a client interface that is easy to maintain. The client interface reduces the complexity of managing computer systems, and does not require operators to remember a large repertoire of commands and command syntax.

According to a preferred embodiment the command syntax is represented using an extensible Markup Language (XML) document file, an XML schema file, and a text description file. The XML document file, XML schema file, and text description file are maintained on a server and downloaded to a client as required. A user interface program uses the XML document, XML schema, and text descriptions to generate a "Wizard" that comprises the graphical user interface, wherein the Wizard provides a series of step-by-step dialogs for assisting the operator in creating a command from the command syntax.

Preferably when the command syntax changes (for example, when a new function is added), updates are only needed at the server, thereby reducing the maintenance cost of clients. In addition, according to the preferred embodiment all clients are synchronized with the server and have the most up to date version of the command syntax. Moreover, generating the graphical user interface from the command syntax greatly reduces the amount of programming effort involved in creating the user interface. Finally, the command syntax is easier to learn, because the Wizard displays a step-by-step series of dialogs for guiding the operator in the use of the command syntax.

In the preferred embodiment, the server maintains control of the command syntax in order to support multiple versions thereof. Moreover, the client is preferably not sensitive to individual versions of the command syntax or it would require an update every time a command was changed. Finally, the tagging rules for the XML allows the user interface program to generate customized Wizards for the command syntax.

A preferred embodiment of the present invention will now be described in detail, by way of example only, and with reference to the following drawings:
FIG. 1 schematically illustrates the environment of a preferred embodiment of the present invention;
FIG. 2 is a flowchart that illustrates the logic of constructing the eXtensible Markup Language (XML) files according to a preferred embodiment of the present invention;
FIG. 3 is a flowchart that illustrates the logic of processing the XML files according to a preferred embodiment of the present invention; and
FIGS. 4A, 4B, 4C, 4D, 4E, 4F, and 4G illustrate a graphical user interface generated from the XML files according to a preferred embodiment of the present invention.

Please note, reference numerals represent corresponding parts throughout.

### Hardware and Software Environment

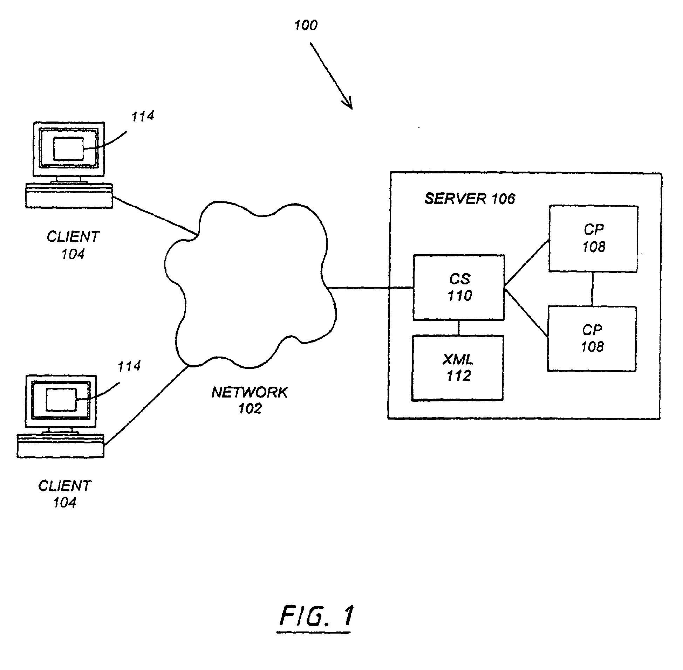

FIG. 1 schematically illustrates the hardware and software environment of the preferred embodiment of the present invention including a distributed computer system 100 using a network 102 to connect one or more clients 104 to a server 106 having one or more data storage devices 108. The network 102 may comprise networks such as LANs, WANs, SNA networks, and the Internet. A typical combination of resources includes clients 104 that are implemented on personal computers or workstations, and servers 106 that are implemented on personal computers, workstations, minicomputers, or mainframes.

The server 106 is a sysplex that executes one or more copies of a Command Processor (CP) 108, which may comprise any number of systems, and any number of different types of systems. The multiple CP's 108 may act individually or as a single system in providing services and applications, but each CP 108 is managed separately, i.e., a separate command is sent to each CP 108 and each response from a CP 108 is viewed separately. As the number of CP's 108 increases, the manageability of the server 106 becomes more complex.

The server 106 also executes one or more Command Servers (CS) 110 that communicate with all of the CP's 108 and the clients 104 for providing operator control of the CP's 108. The CS 110 maintains a collection of related XML files 112 that represent the command syntax for the CP's 108. The XML files 112 store the command syntax as a separately replaceable unit.

The client 104 executes a user interface program 114 that interacts with the CS 110 to provide an operator with control over the CP's 108. The user interface program 114 receives a copy of the XML files 112 from the CS 110, wherein the XML files 112 represent a command syntax of the highest active release level of the command set for the CP's 108. The user interface program 114 processes the XML files 112 to identify resource types, verbs, and keywords. The user interface program 114 then dynamically displays a "Wizard" comprising a step-by-step series of dialogs that guide the operator through the command syntax, and constructs one or more commands based on the operator selections from the dialogs.

The CS 110 receives the commands from the user interface program 114, and submits the commands to one or more (possibly all) of the CP's 108. The CS 110 then receives responses from the CP's 108 and transmits the responses to the user interface program 114. For example, in response to operator commands, the CS 110 may provide the operator with a list of active CP's 108 executing in the system 100 and/or status notifications from the CP's 108.

Preferably, these components 108, 110, 112, and 114 all comprise logic and/or data that is embodied in or retrievable from a computer-readable device, medium, or carrier, e.g., a data storage device, a data communications device, a remote computer or device coupled to the computer via a data communications device, etc. Moreover, this logic and/or data, when read, executed, and/or interpreted by the computer, causes the computer to perform the steps necessary to implement and/or use a preferred embodiment of the present invention.

Thus, the present invention may, for example, be implemented as a method, apparatus, or computer program product using standard programming and/or engineering techniques to produce software, firmware, hardware, or any combination thereof. The term "article of manufacture" (or alternatively, "computer program product") as used herein is intended to encompass logic and/or data accessible from any computer-readable device, carrier, or media.

Those skilled in the art will recognize that any combination of the above components, or any number of different components, including different logic, data, different peripherals, and different devices, may be used to implement the present invention, so long as similar functions are performed thereby. Specifically, those skilled in the art will recognize that the present invention may be applied to any database, associated database management system, or peripheral device.

### Command Syntax

In the preferred embodiment, the general format of the command syntax for the CP 108 comprises the following:
VERB RESOURCETYPE KEYWORD ( PARAMETER )
Each of these elements is described below:
VERB - The verb is the first element and identifies the action to be taken. The verb can be abbreviated.
RESOURCETYPE - The resource type is the second element and identifies the type of resource acted upon by the command. The resource may comprise, for example, transactions, databases, terminals, areas, users, etc. The resource type may support a synonym.
KEYWORD - Keywords are optional elements, depending upon the specific command. The keyword may identify resources of one or more CP's 108. The keyword may also identify a function of the command.
PARAMETER - A parameter identifies a defined or created value or resource, such as a database, terminal, area, user, etc. Parameters in commands are preferably replaced with values. Multiple parameters are separated by a comma within the parentheses.

Of course, those skilled in the art will recognize that other command syntax may be used, as could other elements.

### XML Files

In the preferred embodiment, the XML files 112 provide a tag language representation of the command syntax, and include an XML document file, an XML schema file, and a text representation file. Examples of these files can be found in the Appendices attached hereto, wherein Appendix I is an exemplary XML document file (CommandSyntax.XML), Appendix II is an exemplary XML schema file (CommandSyntax.DTD), and Appendix III is an exemplary text description file (CommandText.TAG).

XML describes a class of data objects and partially describes the behavior of computer programs that process these objects. XML is a restricted form of SGML (Standard Generalized Markup Language), as defined in ISO 8879. The specification for XML can be found at the URL: http://www.w3.org/TR/REC-xml.

An XML schema specifies constraints on the structures and types of elements in an XML document. The basic schema for XML is the DTD (Document Type Definition), although other XML schema definitions are also being developed, such as DCD (Document Content Definition), XSchema, etc. Information concerning DTD and DCD can be found at the URL: http://www.w3.org/.

Preferably, a text description file provides the text descriptions that are used by the user interface program to construct the dialogs of the Wizard. The text descriptions are represented by tags that comprise concatenations of the nested XML tag names in the XML document.

The user interface program 114 of the preferred embodiment incorporates an XML processor that is used to read the XML files 112 and provide access to their content and structure. The XML specification located at the URL noted above describes how an XML processor typically behaves in terms of how it processes XML data.

### XML Document File

As shown in Appendix I, the XML document file includes an <?xml> version identifier, an <!DOCTYPE root SYSTEM "CommandSyntax.dtd"> identifier of the XML schema file (e.g., .dtd file), and opening and closing <root> and </root> tags. The remaining tags in the XML document file are described below in conjunction with the XML schema file.

The command syntax of the XML document file comprises the command syntax for a database management system (DBMS), and more specifically, the IMS^{™} DBMS sold by IBM Corporation, the assignee of the present invention.

### XML Schema File

Each tag in the XML document file has a set of rules that must be followed, which are defined in the XML schema file. As shown in Appendix II, most of the tags have descriptive names that indicate their function. Following is a description of the tags and their attributes in the preferred embodiment:
root - Used as a global tag that provides a wrapper for all the other tags. Attributes: none.
resource - Used to define a resource. Attributes: name - REQUIRED (specifies the name of the resource).
verb - Used to define a verb. Attributes: name - REQUIRED (specifies the name of the verb).
keyword - Used to define a keyword. Attributes: name - REQUIRED(specifies the name of the keyword); required - OPTIONAL (required parameter for command? Yes or No. Default is No).
list - Used within <keyword> to define a list of options.
Attributes: name - OPTIONAL (specifies the name of the group);
default - OPTIONAL (default value for var (see later)); multiple - OPTIONAL (does var accept multiple values? Yes or No. Default is No.); and goto - OPTIONAL (point to another keyword to be enabled).
compare - Used within <keyword> to define a comparison between an operator and a variable. Attributes: name - REQUIRED (name of comparison).
option - Used within <list> to make a radio button or checkbox. Attributes: name - REQUIRED (name of keyword this is pointing to);
goto - OPTIONAL (point to another keyword to be enabled, wherein the goto attribute of the <list> and <option> tags means that the specified keyword is applicable only when that list or option is selected.)
var - Used within <keyword> and <list> to define a variable.
Attributes: name -REQUIRED (name of variable); wildcard - OPTIONAL (does this var support wildcards? Yes or No. Default is No.); default - OPTIONAL (default value for var.); and multiple - OPTIONAL (does var accept multiple values? Yes or No. Default is No.). operator - Used within <compare> to define an operator for the list of operators. Attributes: keyword - REQUIRED (name of keyword this goto points to).

### Text Description File

As shown in Appendix III, the tags in the text description file are concatenated versions of tags used in the XML document file. By traversing the XML document file and concatenating the tag names therein, the user interface program 114 can identify the tags used in the text description file and thereby access the text to be displayed by the Wizard. Generally, this text is in HTML (HyperText Markup Language) format, although other formats may be used as well.

The text description file is used for the following reasons:
(1) To provide enhanced output for the operator. In the XML document file, commands are often represented by mnemonics that are recognized by the CP 108, but which may or may not be completely understandable by the operator.
(2) To allow for internationalization or localization of the command syntax. The user interface program 114 may be used in multiple countries, and language support should be provided for each country. Since the XML document and XML schema files cannot be changed (since their format is dictated by the CP 108), the text description file provides a mechanism whereby the Wizard output from the user interface program 114 is understandable by the operator.
(3) To simplify the XML document file. The use of the text description file avoids the inclusion of confusing text descriptions within the XML document file.

### Logic of the Preferred Embodiment

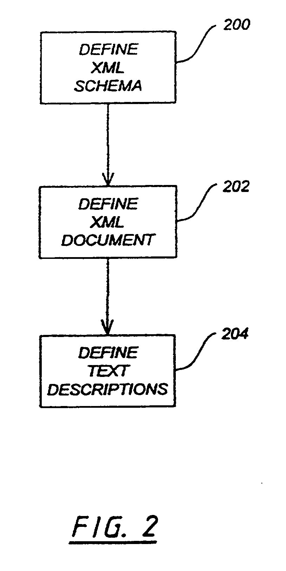

Flowcharts which illustrate the logic according to the preferred embodiment of the present invention are shown in FIGS. 2-3. Those skilled in the art will recognize that this logic is provided for illustrative purposes only and that different logic may be used to accomplish the same results.

FIG. 2 is a flowchart that illustrates the logic of encoding the XML files 112 according to the preferred embodiment of the present invention.

Block 200 represents the XML schema file being defined and then stored on the server 106. Preferably, this structure should not change as the command syntax changes.

Block 202 represents the XML document file being defined and then stored on the server 106. The XML document file is defined. Preferably, this structure will change as the command syntax changes. The Block includes the following steps:
a. As noted above, the XML document file includes an <?xml> version identifier, an <!DOCTYPE root SYSTEM "CommandSyntax.dtd"> identifier of the XML schema file (e.g., .dtd file), and opening and closing <root> and </root> tags.
b. The resources are defined (TRAN, OLC, ...) with <resource> tags. For each resource, its verbs are defined (QUERY, UPDATE, ...) with <verb> tags. For each verb, its keywords are defined with <keyword> tags. A keyword can include either a variable (a <var> tag), a list of options (<list> and <option> tags), or a list of operators for comparison (<compare> and <operator> tags).
c. Each command is uniquely identified by a <resource> tag followed by a <verb> tag. Each keyword in the command has its own <keyword> tag, and the type of information a keyword contains can be ascertained by its children. If the keyword contains a <var>, then the operator will be prompted to input a variable name.

Block 204 represents the text description file being defined and then stored on the server 106. Preferably, this structure will change as the command syntax changes.

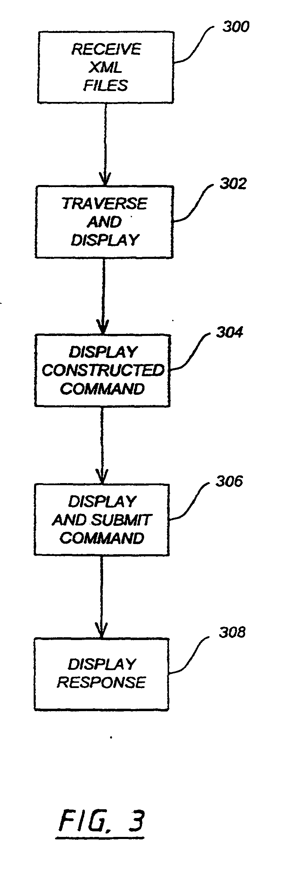

FIG. 3 is a flowchart that illustrates the logic of processing the XML files 112 according to the preferred embodiment of the present invention.

Block 300 represents the user interface program 114 receiving the XML files 112 from the server 106.

Block 302 represents the user interface program 114, using the XML schema file as a template, traversing through the tags in the XML document file to gather information from each tag.

Block 304 represents the user interface program 114 constructing a "Wizard" for the XML document file using the text description file, wherein the Wizard displays a series of steps to the operator. Each of the steps displayed by the Wizard corresponds to a <keyword> element in the XML document file. The text description file is used to define the display elements for the Wizard. In the example XML document file provided above, the Wizard would have seven steps as described further below.

Block 306 represents the user interface program 114 displaying the command as it has been built via the operator selections of the Wizard, wherein a button or other mechanism is provided for the operator to submit the command to one or more of the CP's 108.

Block 308 represents the user interface program 114 displaying any responses received from the CP's 108 for the operator.

### Graphical User Interface

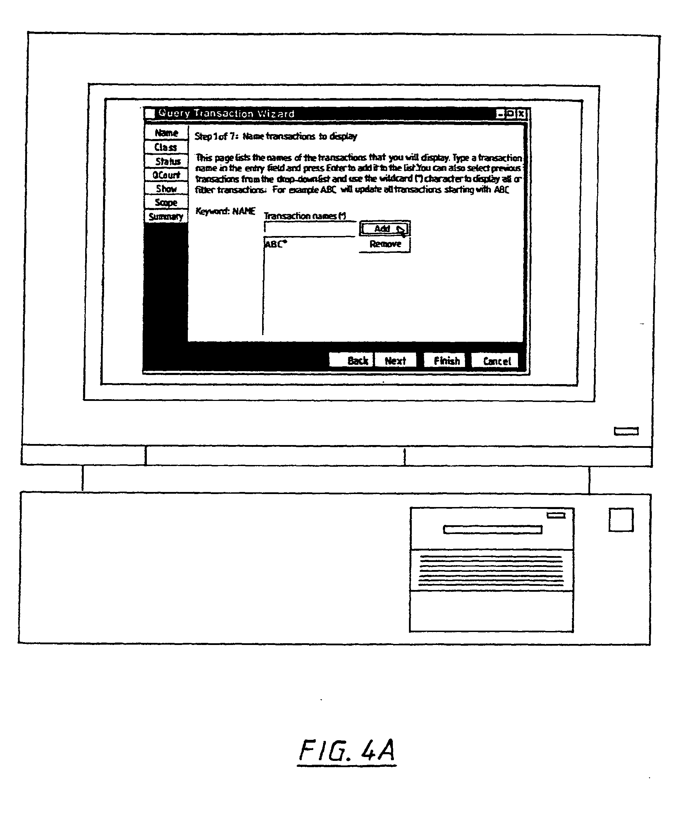

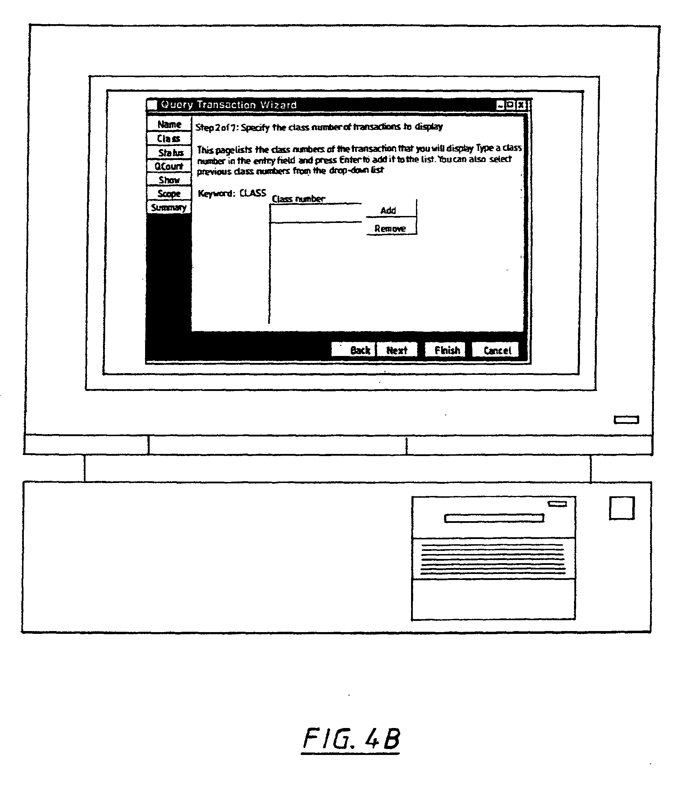

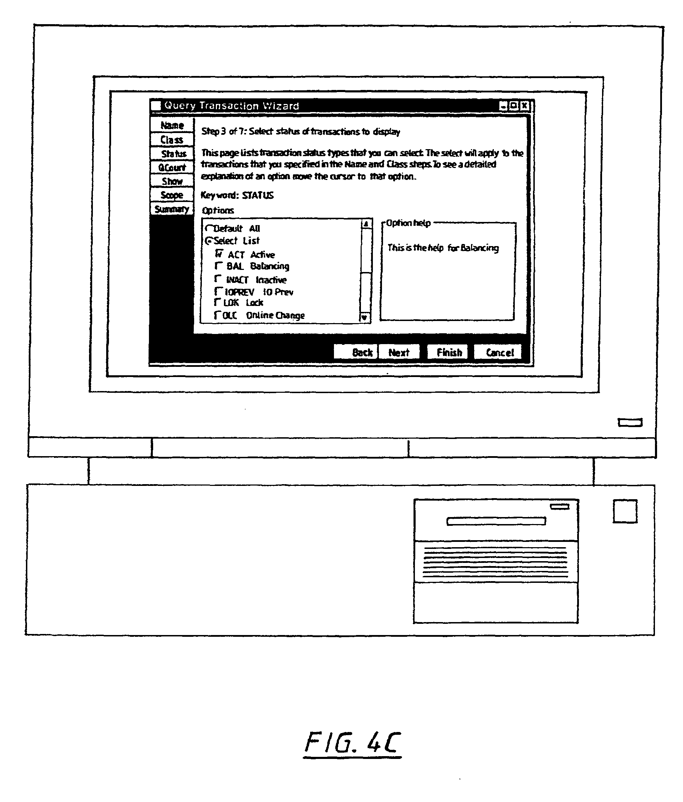

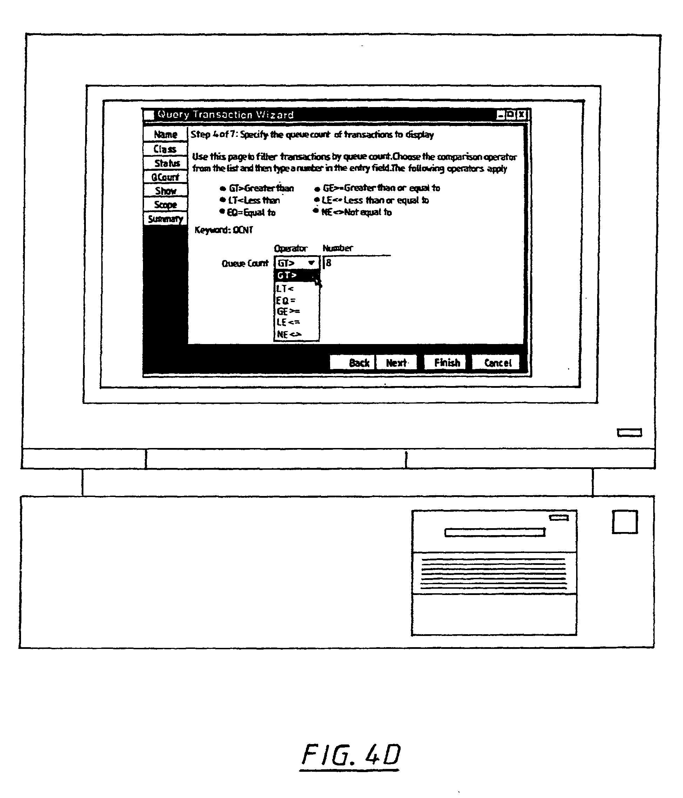

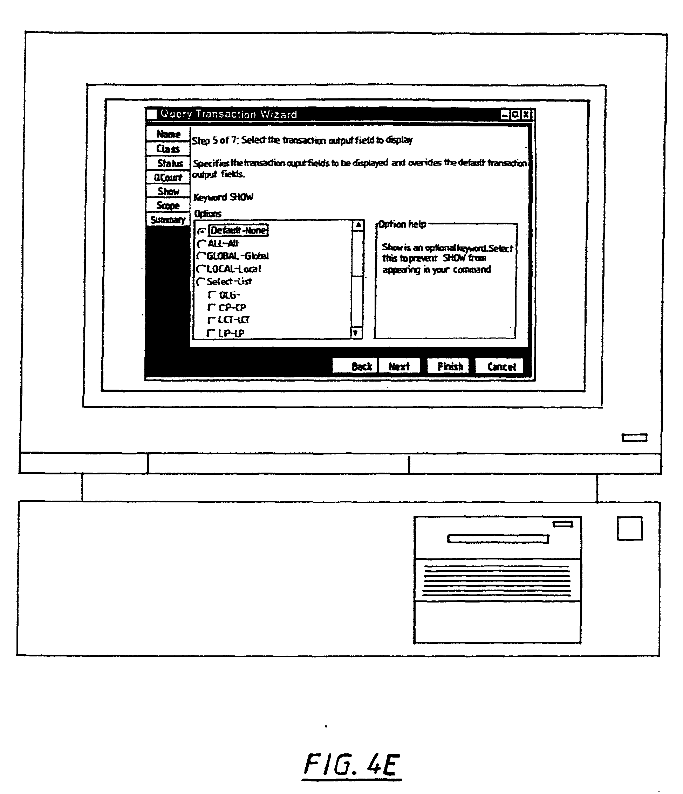

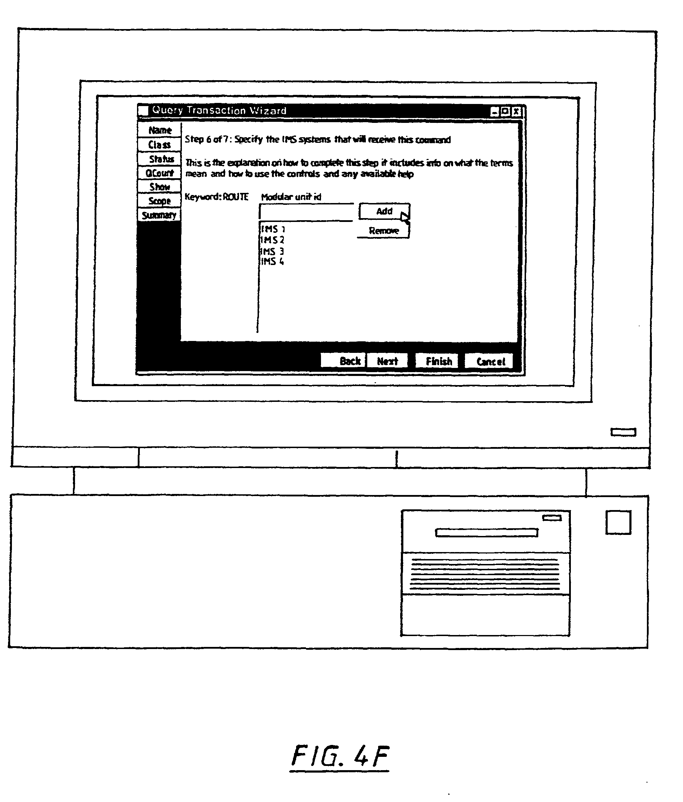

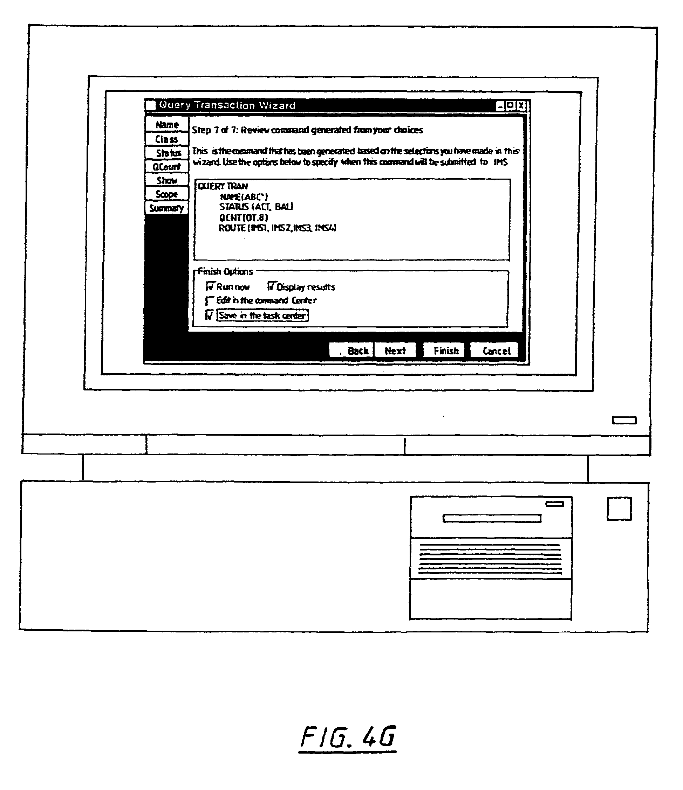

FIGS. 4A, 4B, 4C, 4D, 4E, 4F, and 4G illustrate the graphical user interface generated from the XML files 112 according to the preferred embodiment of the present invention. These particular "snapshots" of the graphical user interface correspond to the Wizard generated for the example XML files 112 described in the Appendices. Of course, those skilled in the art will recognize that this graphical user interface is provided for illustrative purposes only and that a different graphical user interface may be used to accomplish the same results.

Specifically, the Wizard shown in FIGS. 4A, 4B, 4C, 4D, 4E, 4F, and 4G corresponds to the following portion of Appendix I:

```
 <resource name="TRAN">

    <verb name="QUERY">

          <keyword name="NAME" required="YES">
                <var name="TRAN_NAME" wildcard="YES"
                      multiple="YES" default="*"/>
          </keyword>

          <keyword name="CLASS">
                <var name="CLASS_NUMBER" multiple="YES"/>
          </keyword>

          <keyword name="STATUS">
                <list>
                      <option name="DEFAULT"/>
                            <list name="LIST" multiple="YES">
                                  <option name="ACT"/>
                                  <option name="BAL"/>
                                  <option name="INACT"/>
                                  <option name="IOPREV"/>
                                  <option name="LCK"/>
                                  <option name="OLC"/>
                                  <option name="PSTO"/>
                                  <option name="PUR"/>
                                  <option name="QERR"/>
                                  <option name="SPND"/>
                                  <option name="STO"/>
                                  <option name="TRA"/>
                                  <option name="USTO"/>
                            </list>
                </list>
          </keyword>

          <keyword name="QCNT">
                <compare name="NUMBER">
                      <operator name="GT"/>
                      <operator name="LT"/>
                      <operator name="EQ"/>
                      <operator name="GE"/>
                      <operator name="LE"/>
                      <operator name="NE"/>
                </compare>
          </keyword>

          <keyword name="SHOW">
                <list>
                      <option name="DEFAULT"/>
                      <option name="ALL"/>
                      <option name="GLOBAL"/>
                      <option name="LOCAL"/>
                      <list name="LIST" multiple="YES">
                            <option name="CLS"/>
                            <option name="CP"/>
                            <option name="LCT"/>
                            <option name="LP"/>
                            <option name="NP"/>
                            <option name="PARLM"/>
                            <option name="PLCT"/>
                            <option name="PSBNAME"/>
                            <option name="QCNT"/>
                            <option name="RC"/>
                            <option name="SEGNO"/>
                            <option name="SEGSZ"/>
                            <option name="STATUS"/>
                      </list>
                </list>
          </keyword>

          <keyword name="ROUTE">
                <var name="IMS" wildcard="YES" multiple="YES"
                      default="*"/>
          </keyword>

    </verb>

 </resource>
```

In this example, the CP's 108 each comprise a database management system (DBMS), and more specifically, the IMS^{™} DBMS sold by IBM Corporation, the assignee of the present invention. Thus, as noted above, the command syntax of the XML document file comprises the command syntax for an IMS^{™} DBMS.

FIG. 4A illustrates step 1 of 7 of the Wizard, which prompts the operator to name the transactions to display. This page of the Wizard lists the names of the transactions that will be displayed. The operator types a transaction name in the entry field and presses Enter to add it to the list. The operator can also select previous transactions from the drop-down list and use the wildcard (*) character to display all or filter transactions.

FIG. 4B illustrates step 2 of 7 of the Wizard, which prompts the operator to specify the class number of transactions to display. This page of the Wizard lists the class numbers of the transactions that will be displayed. The operator types a class number in the entry field and presses Enter to add it to the list. The operator can also select previous class numbers from the drop-down list.

FIG. 4C illustrates step 3 of 7 of the Wizard, which prompts the operator to select a status of the transactions to display. This page of the Wizard lists transaction status types that the operator can select. The select will apply to the transactions that the operator specified in the previous Name and Class steps (i.e., steps 1 and 2).

FIG. 4D illustrates step 4 of 7 of the Wizard, which prompts the operator to specify the queue count of transactions to display. This page of the Wizard is used to filter transactions by queue count. The operator chooses the comparison operator from the list and then types a number in the entry field.

FIG. 4E illustrates step 5 of 7 of the Wizard, which prompts the operator to select the transaction output field to display. This page of the Wizard is used to specify the transaction output fields to be displayed and overrides the default transaction output fields.

FIG. 4F illustrates step 6 of 7 of the Wizard, which prompts the operator to specify the CP 108 that will receive this command. This page of the Wizard is used to complete the operation and submit the command.

FIG. 4G illustrates step 7 of 7 of the Wizard, which prompts the operator to review the command generated for the specified CP 108. This page of the Wizard is used to specify when the generated command will be submitted to the specified CP 108.

Those skilled in the art will recognize that different database management systems, operating environments, etc., could be substituted for those described herein. Those skilled in the art will recognize that the present invention could be used in any type of computer system, and need not be limited to a client-server architecture. Those skilled in the art will recognize that the present invention could be used with many types of computer systems, and need not be limited to the examples described herein.

### Appendix I

```
 <?xml version="1.0"?>

 <!-- *********************************************
 **
 ** This file contains sample command syntax in XML
 ** for the following resources:
 ** LTERM resource, QUERY and UPDATE verbs
 ** TRAN resource, QUERY and UPDATE verbs
 **
 *********************************************-->

 <!DOCTYPE root SYSTEM "CommandSyntax.dtd">

 <root>

 <resource name="LTERM">

 <verb name="QUERY">

  <keyword name="NAME" required="YES">
    <var name="LTERM_NAME" wildcard="YES" multiple="YES" default="*"/>
  </keyword>

  <keyword name="STATUS">
    <list>
      <option name="DEFAULT"/>
      <list name="LIST" multiple="YES">
        <option name="LCK"/>
        <option name="PSTO"/>
        <option name="PUR"/>
        <option name="QERR"/>
        <option name="QLCK"/>
        <option name="STATIC"/>
        <option name="STO"/>
      </list>
    </list>
  </keyword>

  <keyword name="QCNT">
    <compare name="NUMBER">
     <operator name="GT"/>
      <operator name="LT"/>
      <operator name="EQ"/>
      <operator name="GE"/>
      <operator name="LE"/>
      <operator name="NE"/>
    </compare>
  </keyword>

  <keyword name="SHOW">
    <list>
      <option name="DEFAULT"/>
      <option name="ALL"/>
      <option name="GLOBAL"/>
      <option name="LOCAL"/>
      <list name="LIST" multiple="YES">
        <option name="NODE"/>
        <option name="QCNT"/>
        <option name="STATUS"/>
        <option name="USER"/>
      </list>
    </list>
  </keyword>

  <keyword name="ROUTE">
    <var name="IMS" wildcard="YES" multiple="YES" default="*"/>
  </keyword>

 </verb>

 <verb name="UPDATE">

  <keyword name="NAME" required="YES">
    <var name="LTERM_NAME" wildcard="YES" multiple="YES"/>
  </keyword>

  <keyword name="START">
    <list>
      <option name="DEFAULT"/>
      <option name="ALL"/>
      <list name="LIST" multiple="YES">
        <option name="IN"/>
        <option name="OUT"/>
        <option name="QUE"/>
      </list>
    </list>
  </keyword>

  <keyword name="STOP">
    <list>
      <option name="DEFAULT"/>
      <option name="ALL"/>
      <list name="LIST" multiple="YES">
        <option name="IN"/>
        <option name="OUT"/>
        <option name="QUE"/>
      </list>
    </list>
  </keyword>

  <keyword name="ROUTE">
    <var name="IMS" wildcard="YES" multiple="YES" default="*"/>
  </keyword>

 </verb>

 </resource>


 </resource>

 <resource name="TRAN">

 <verb name="QUERY">

  <keyword name="NAME" required="YES">
    <var name="TRAN_NAME" wildcard="YES" multiple="YES" default="*"/>
  </keyword>

  <keyword name="CLASS">
    <var name="CLASS_NUMBER" multiple="YES"/>
  </keyword>

  <keyword name="STATUS">
    <list>
      <option name="DEFAULT"/>
      <list name="LIST" multiple="YES">
        <option name="ACT"/>
        <option name="BAL"/>
        <option name="INACT"/>
        <option name="IOPREV"/>
        <option name="LCK"/>
        <option name="OLC"/>
        <option name="PSTO"/>
        <option name="PUR"/>
        <option name="QERR"/>
        <option name="SPND"/>
        <option name="STO"/>
        <option name="TRA"/>
        <option name="USTO"/>
      </list>
    </list>
  </keyword>

  <keyword name="QCNT">
    <compare name="NUMBER">
      <operator name="GT"/>
      <operator name="LT"/>
      <operator name="EQ"/>
      <operator name="GE"/>
      <operator name="LE"/>
      <operator name="NE"/>
    </compare>
  </keyword>

  <keyword name="SHOW">
    <list>
      <option name="DEFAULT"/>
      <option name="ALL"/>
      <option name="GLOBAL"/>
      <option name="LOCAL"/>
      <list name="LIST" multiple="YES">
        <option name="CLS"/>
        <option name="CP"/>
        <option name="LCT"/>
        <option name="LP"/>
        <option name="NP"/>
        <option name="PARLM"/>
        <option name="PLCT"/>
        <option name="PSBNAME"/>
        <option name="QCNT"/>
        <option name="RC"/>
        <option name="SEGNO"/>
        <option name="SEGSZ"/>
        <option name="STATUS"/>
      </list>
    </list>
  </keyword>

  <keyword name="ROUTE">
    <var name="IMS" wildcard="YES" multiple="YES" default="*"/>
  </keyword>

 </verb>

 <verb name="UPDATE">

  <keyword name="NAME" required="YES">
    <var name="TRAN_NAME" wildcard="YES" multiple="YES"/>
  </keyword>

  <keyword name="CLASS">
    <var name="CLASS_NUMBER" multiple="YES"/>
  </keyword>

  <keyword name="START">
    <list>
      <option name="DEFAULT"/>
      <option name="ALL"/>
      <list name="LIST" multiple="YES">
        <option name="IN"/>
        <option name="OUT"/>
        <option name="QUE"/>
        <option name="SCHED"/>
        <option name="SPNDQ"/>
        <option name="TRC"/>
      </list>
    </list>
  </keyword>

  <keyword name="STOP">
    <list>
      <option name="DEFAULT"/>
      <option name="ALL"/>
      <list name="LIST" multiple="YES">
        <option name="IN"/>
        <option name="OUT"/>
        <option name="QUE"/>
        <option name="SCHED"/>
        <option name="TRC"/>
      </list>
    </list>
  </keyword>

  <keyword name="SET">
    <list name="LIST" multiple="YES">
      <var name="CLASS"/>
      <var name="CPRI"/>
      <var name="LMCT"/>
      <var name="LPRI"/>
      <var name="MAXRGNS"/>
      <var name="NPRI"/>
      <var name="PARLIM"/>
      <var name="PLMCT"/>
      <var name="SEGNO"/>
      <var name="SEGSIZE"/>
    </list>
  </keyword>

  <keyword name="ROUTE">
    <var name="IMS" wildcard="YES" multiple="YES" default="*"/>
  </keyword>
 </verb>

 </resource>

 </root>
```

### Appendix II

```
 <!-- ************************************************************
 **
 ** This file defines the command syntax DTD
 **
 ************************************************************ -->

 <!ELEMENT root ( resource* )>
 <!ELEMENT resource ( verb* )>
 <!ELEMENT verb ( keyword* )>
 <!ELEMENT keyword ( list* | compare | var )>
 <!ELEMENT list ( list | var | option )*>
 <!ELEMENT compare ( operator* )>
 <!ELEMENT option EMPTY>
 <!ELEMENT var EMPTY>
 <!ELEMENT operator EMPTY>

 <!ATTLIST resource name CDATA #REQUIRED>
 <!ATTLIST verb name CDATA #REQUIRED>
 <!ATTLIST keyword name CDATA #REQUIRED
               required CDATA #IMPLIED>
 <!ATTLIST var name CDATA #REQUIRED
           wildcard CDATA #IMPLIED
           default CDATA #IMPLIED
           multiple CDATA #IMPLIED>
 <!ATTLIST option name CDATA #REQUIRED
              goto CDATA #IMPLIED>
 <!ATTLIST list name CDATA #IMPLIED
            default CDATA #IMPLIED
            multiple CDATA #IMPLIED
            goto CDATA #IMPLIED>
 <!ATTLIST compare name CDATA #REQUIRED>
 <!ATTLIST operator name CDATA #REQUIRED>
```

### Appendix III

```
 "**************************************************
 **
 ** This file contains sample text strings used in the command syntax
 ** for the following resources:
 **    LTERM resource, QUERY and UPDATE verbs
 **    TRAN resource, QUERY and UPDATE verbs
 **
 **************************************************

 LTERM_NAME
  "Logical Terminal"

 LTERM_QUERY_NAME
  "Query"

 LTERM_QUERY_NAME_NAME
  "Name"
 LTERM_QUERY_NAME_STEP_TITLE
  "Name logical terminals to display"
 LTERM_QUERY_NAME_STEP_TEXT
  "This page lists the names of the logical terminals that you will
   display. Type a logical terminal name in the entry field and
   press Enter to add it to the list. You can also select
   previous logical terminals from the drop-down list and use the
   wildcard (*) character to display all or filter logical
   terminals. For example, ABC* will update all logical terminals
   starting with ABC."
 LTERM_QUERY_NAME_CONTROLS_TITLE
  "Logical terminal names (*)"

 LTERM_QUERY_S TATUS_NAME
  "Status"
 LTERM_QUERY_STATUS_STEP_TITLE
  "Select status of logical terminals to display"
 LTERM_QUERY_STATUS_STEP_TEXT
  "This page lists logical terminal status types that you can
   select. The select will apply to the logical terminals that
   you specified in the Name and Class steps. To see a detailed
   explanation of an option, move the cursor to that option."
 LTERM_QUERY_STATUS_CONTROLS_TITLE
   "Options"
 LTERM_QUERY_STATUS_CONTROLS_HELP
   "Option help"
 LTERM_QUERY_STATUS_DEFAULT_NAME
   "Default - All"
 LTERM_QUERY_STATUS_DEFAULT_HELP
   "This is the default -- select all status"
 LTERM_QUERY_STATUS_LIST_NAME
   "Select - List"
 LTERM_QUERY_STATUS_LIST_HELP
   "Select the status options from the list."
 LTERM_QUERY_STATUS_LIST_LCK_NAME
   "Lock"
 LTERM_QUERY_STATUS_LIST_LCK_HELP
   "This is the help for Lock"
 LTERM_QUERY_STATUS_LIST_PSTO_NAME
   "Process Stop"
 LTERM_QUERY_STATUS_LIST_PSTO_HELP
   "This is the help for Process Stop"
 LTERM_QUERY_S TATUS_LIST_PUR_NAME
   "Purge"
 LTERM_QUERY_STATUS_LIST_PUR_HELP
   "This is the help for Purge"
 LTERM_QUERY_STATUS_LIST_QERR_NAME
   "Queue Error"
 LTERM_QUERY_STATUS_LIST_QERR_HELP
   "This is the help for Queue Error"
 LTERM_QUERY_STATUS_LIST_QLCK_NAME
   "Queue Lock"
 LTERM_QUERY_STATUS_LIST_QLCK_HELP
   "This is the help for Queue Lock"
 LTERM_QUERY_STATUS_LIST_STATIC_NAME
   "Static"
 LTERM_QUERY_STATUS_LIST_STATIC_HELP
   "This is the help for Static"
 LTERM_QUERY_STATUS_LIST_STO_NAME
   "Stop"
 LTERM_QUERY_STATUS_LIST_STO_HELP
   "This is the help for Stop"
 LTERM_QUERY_QCNT_NAME
   "QCount"
 LTERM_QUERY_QCNT_STEP_TITLE
   "Specify the queue count of logical terminals to display"
 LTERM_QUERY_QCNT_STEP_TEXT
   "Use this page to filter logical terminals by queue count.
   Choose the comparison operator from the list and then type a
   number in the entry field. The following operators apply:
   <TABLE>
   <TR><TD>
   <UL>
   <LI>GT > Greater than
   <LI>LT < Less than
   <LI>EQ = Equal to
   </UL>
   </TD>
   <TD>
    <UL>
   <LI>GE >= Greater than or equal to
   <LI>LE <= Less than or equal to
   <LI>NE <> Not equal to
   </UL>
   </TD>
   </TABLE>"
 LTERM_QUERY_QCNT_CONTROLS_TITLE
   "Queue Count"
 LTERM_QUERY_QCNT_OPERATOR
   "Operator"
 LTERM_QUERY_QCNT_NUMBER
   "Number"
 LTERM_QUERY_QCNT_NUMBER_GT_NAME
   " > "
 LTERM_QUERY_QCNT_NUMBER_LT_NAME
   " < "
 LTERM_QUERY_QCNT_NUMBER_EQ_NAME
   " = "
 LTERM_QUERY_QCNT_NUMBER_GE_NAME
   " >= "
 LTERM_QUERY_QCNT_NUMBER_LE_NAME
   " <= "
 LTERM_QUERY_QCNT_NUMBER_NE_NAME
  " <> "

 LTERM_QUERY_SHOW_NAME
  "Show"
 LTERM_QUERY_SHOW_STEP_TITLE
  "Select the logical terminal output field to display"
 LTERM_QUERY_SHOW_STE P_TEXT
  "Specifies the logical terminal output fields to be
   displayed and overrides the default logical terminal
   output fields."
 LTERM_QUERY_SHOW_CONTROLS_TITLE
  "Options"
 LTERM_QUERY_SHOW_CONTROLS_HELP
  "Option help"
 LTERM_QUERY_SHOW_DEFAULT_NAME
  "Default - None"
 LTERM_QUERY_SHOW_DEFAULT_HELP
  "Show is an optional keyword. Select this to
   prevent SHOW from appearing in your command."
 LTERM_QUERY_SHOW_ALL_NAME
  "All"
 LTERM_QUERY_SHOW_ALL_HELP
  "Selects all fields"
 LTERM_QUERY_SHOW_GLOBAL_NAME
  "Global"
 LTERM_QUERY_SHOW_GLOBAL_HELP
  "This is the help for Show Global."
 LTERM_QUERY_SHOM_LOCAL_NAME
  "Local"
 LTERM_QUERY_SHOW_LOCAL_HELP
  "This is the help for Show Local."
 LTERM_QUERY_SHOW_LIST_NAME
  "Select - List"
 LTERM_QUERY_SHOW_LIST_HELP
  "Select from the list"
 LTERM_OUERY_SHOW_LIST_NODE_NAME
  "NODE"
 LTERM_QUERY_SHOW_LIST_NODE_HELP
  "This is the help for Node"
 LTERM_QUERY_SHOW_LIST_QCNT_NAME
  "QCNT"
 LTERM_QUERY_SHOW_LIST_QCNT_HELP
  "Display the global queue count and the local queue count."
 LTERM_QUERY_SHOW_LIST_STATUS_NAME
  "STATUS"
 LTERM_QUERY_SHOW_LIST_STATUS_HELP
  "Global and local logical terminal status."
 LTERM_QUERY_SHOW_LIST_USER_NAME
  "User"
 LTERM_QUERY_SHOW_LIST_USER_HELP
  "This is the help for User"

 LTERM_QUERY_ROUTE_NAME
  "Route"
 LTERM_QUERY_ROUTE_STEP_TITLE
  "Specify the systems that will receive this command"
 LTERM_OUERY_ROUTE_STEP_TEXT
  "This is the explanation of how to complete this step.
   It includes info on what the terms mean and how to use the
   controls and any available help."
 LTERM_QUERY_ROUTE_CONTROLS_TITLE
  "Modular unit id"

 LTERM_UPDATE_NAME
  "Update"

 LTERM_UPDATE_NAME_NAME
  "Name"
 LTERM UPDATE NAME TEP_TITLE
  "Name logical terminals to update"
 LTERM_UPDATE_NAME_STEP_TEXT
  "This page lists the names of the logical terminals that you will
   update. Type a logical terminal name in the entry field and
   press Enter to add it to the list. You can also select
   previous logical terminals from the drop-down list and use the
   wildcard (*) character to display all or filter logical
   terminals. For example, ABC* will update all logical terminals
   starting with ABC."
 LTERM_UPDATE_NAME_CONTROLS_TITLE
  "Transaction names (*)"
 LTERM_UPDATE_START_NAME
  "Start"
 LTERM_UPDATE_START_STEP_TITLE
  "Select logical terminal functions to stop"
 LTERM_UPDATE_START_STEP_TEXT
  "This page lists logical terminal functions that you can start.
   The start will apply to the logical terminals that you selected
   in the Name and Class steps. To see a detailed explanation
   of an option, move the cursor to that option."
 LTERM_UPDATE_START_CONTROLS_TITLE
  "Options"
 LTERM_UPDATE_START_CONTROLS_HELP
  "Option help"
 LTERM_UPDATE_START_DEFAULT_NAME
  "Default - None"
 LTERM_UPDATE_START_DEFAULT_HELP
  "This is the default -- do not start any functions"
 LTERM_UPDATE_START_ALL_NAME
  "All"
 LTERM_UPDATE_START_ALL_HELP
  "Start all of the logical terminal functions."
 LTERM_UPDATE_START_LIST_NAME
  "Select - List"
 LTERM_UPDATE_START_LIST_HELP
  "Select the start options from the list."
 LTERM_UPDATE_START_LIST_IN_NAME
  "Input"
 LTERM_UPDATE_START_LIST_IN_HELP
  "This is the help for Input"
 LTERM_UPDATE_START_LIST_OUT_NAME
  "Output"
 LTERM_UPDATE_START_LIST_OUT_HELP
  "This is the help for Output"
 LTERM_UPDATE_START_LIST_QUE_NAME
  "Queueing"
 LTERM_UPDATE_START_LIST_QUE_HELP
  "This is the help for Queueing"
 LTERM_UPDATE_STOP_NAME
  "Stop"
 LTERM_UPDATE_STOP_STEP_TITLE
  "Select logical terminal functions to stop"
 LTERM_UPDATE_STOP_STEP_TEXT
  "This page lists logical terminal functions that you can stop.
   The stop will apply to the logical terminals that you selected
   in the Name and Class steps. To see a detailed explanation
   of an option, move the cursor to that option."
 LTERM_UPDATE_STOP_CONTROLS_TITLE
  "Options"
 LTERM_UPDATE_STOP__CONTROLS_HELP
  "Option help"
 LTERM_UPDATE_STOP_DEFAULT_NAME
  "Default - None"
 LTERM_UPDATE_STOP_DEFAULT_HELP
  "This is the default -- do not stop any functions"
 LTERM_UPDATE_STOP_ALL_NAME
  "All"
 LTERM_UPDATE_STOP_ALL_HELP
  "Stop all of the logical terminal options."
 LTERM_UPDATE_STOP_LIST_NAME
  "Select - List"
 LTERM_UPDATE_STOP_LIST_HELP
  "Select the stop options from the list."
 LTERM_UPDATE_STOP_LIST_IN_NAME
  "Input"
 LTERM_UPDATE_STOP_LIST_IN_HELP
  "This is the help for Input"
 LTERM_UPDATE_STOP_LIST_OUT_NAME
  "Output"
 LTERM_UPDATE_STOP_LIST_OUT_HELP
  "This is the help for Output"
 LTERM_UPDATE_STOP_LIST_QUE_NAME
  "Queueing"
 LTERM_UPDATE_STOP_LIST_QUE_HELP
  "This is the help for Queueing"

 LTERM_UPDATE_ROUTE_NAME
  "Route"
 LTERM_UPDATE_ROUTE_STEP_TITLE
  "Specify the systems that will receive this commmand"
 LTERM_UPDATE_ROUTE_STEP_TEXT
  "This is the explanation of how to complete this step.
   It includes info on what the terms mean and how to use the
   controls and any available help."
 LTERM_UPDATE_ROUTE_CONTROLS_TITLE
  "Modular unit id"




 TRAN_NAME
  "Transaction"

 TRAN_QUERY_NAME
  "Query"

 TRAN_QUERY_NAME_NAME
  "Name"
 TRAN_QUERY_NAME_STEP_TITLE
  "Name transactions to display"
 TRAN_QUERY_NAME_STEP_TEXT
  "This page lists the names of the transactions that you will
   display. Type a transaction name in the entry field and
   press Enter to add it to the list. You can also select
   previous transactions from the drop-down list and use the
   wildcard (*) character to display all or filter transactions.
   For example, ABC* will update all transactions starting with
   ABC."
 TRAN_QUERY_NAME_CONTROLS_TITLE
  "Transaction names (*)"

 TRAN_QUERY_CLASS_NAME
  "Class"
 TRAN_QUERY_CLASS_STEP_TITLE
  "Specify the class number of transactions to display"
 TRAN_QUERY_CLASS_STEP_TEXT
  "This page lists the class numbers of the transactions that you
   will display. Type a class number in the entry field and
   press Enter to add it to the list. You can also select
  previous class numbers from the drop-down list."
 TRAN_QUERY_CLASS_CONTROLS_TITLE
  "Class number"
 TRAN_QUERY_STATUS_NAME
  "Status"
 TRAN_QUERY_STATUS_STEP_TITLE
  "Select status of transactions to display"
 TRAN_QUERY_STATUS_STEP_TEXT
  "This page lists transaction status types that you can select.
   The select will apply to the transactions that you specified
   in the Name and Class steps. To see a detailed explanation
   of an option, move the cursor to that option."
 TRAN_QUERY_STATUS_CONTROLS_TITLE
  "Options"
 TRAN_QUERY_STATUS_CONTROLS_HELP
  "Option help"
 TRAN_QUERY_STATUS_DEFAULT_NAME
  "Default - All"
 TRAN_QUERY_STATUS_DEFAULT_HELP
  "This is the default -- select all status."
 TRAN_QUERY_STATUS_LIST_NAME
  "Select - List"
 TRAN_QUERY_STATUS_LIST_HELP
  "Select the status options from the list."
 TRAN_QUERY_STATUS_LIST_ACT_NAME
  "Active"
 TRAN_QUERY_STATUS_LIST_ACT_HELP
  "This is the help for Active."
 TRAN_QUERY_STATUS_LIST_BAL_NAME
  "Balancing"
 TRAN_QUERY_STATUS_LIST_BAL_HELP
  "This is the help for Balancing"
 TRAN_QUERY_STATUS_LIST_INACT_NAME
  "Inactive"
 TRAN_QUERY_STATUS_LIST_INACT_HELP
  "This is the help for Inactive"
 TRAN_QUERY_STATUS_LIST_IOPREV_NAME
  "IO Prev"
 TRAN_QUERY_STATUS_LIST_IOPREV_HELP
  "This is the help for IO Prev"
 TRAN_QUERY_STATUS_LIST_LCK_NAME
  "Lock"
 TRAN_QUERY_STATUS_LIST_LCK_HELP
  "This is the help for Lock"
 TRAN_QUERY_STATUS_LIST_OLC_NAME
  "Online Change"
 TRAN_OUERY_STATUS_LIST_OLC_HELP
  "This is the help for Online Change"
 TRAN_QUERY_S TATUS_LIST_PSTO_NAME
  "Process Stop"
 TRAN_QUERY_STATUS_LIST_PSTO_HELP
  "This is the help for Process Stop"
 TRAN_QUERY_STATUS_LIST_PUR_NAME
  "Purge"
 TRAN_QUERY_STATUS_LIST_PUR_HELP
  "This is the help for Purge"
 TRAN_QUERY_STATUS_LIST_QERR_NAME
  "Queue Error"
 TRAN_QUERY_STATUS_LIST_QERR_HELP
  "This is the help for Queue Error"
 TRAN_QUERY_STATUS_LIST_SPND_NAME
  "Suspended"
 TRAN_QUERY_STATUS_LIST_SPND_HELP
  "This is the help for Suspended"
 TRAN_QUERY_STATUS_LIST_STO_NAME
  "Stopped"
 TRAN_QUERY_STATUS_LIST_STO_HELP
  "This is the help for Stopped"
 TRAN_QUERY_STATUS_LIST_TRC_NAME
  "Trace"
 TRAN_QUERY_STATUS_LIST_TRC_HELP
  "This is the help for Trace"
 TRAN_QUERY_STATUS_LIST_USTO_NAME
  "User Stop"
 TRAN_QUERY_STATUS_LIST_USTO_HELP
  "This is the help for User Stop"

 TRAN_QUERY_OCNT_NAME
  "QCount"
 TRAN_QUERY_QCNT_STEP_TITLE
  "Specify the queue count of transactions to display"
 TRAN_QUERY_QCNT_STEP_TEXT
  "Use this page to filter transactions by queue count.
   Choose the comparison operator from the list and then type a
   number in the entry field. The following operators apply:
   <TABLE>
   <TR><TD>
   <UL>
   <LI>GT > Greater than
   <LI>LT < Less than
   <LI>EQ = Equal to
   </UL>
   </TD>
   <TD>
   <UL>
   <LI>GE >= Greater than or equal to
   <LI>LE <= Less than or equal to
   <LI>NE <> Not equal to
   </UL>
   </TD>
   </TABLE>"
 TRAN_QUERY_OCNT_CONTROLS_TITLE
  "Queue Count"
 TRAN_QUERY_QCNT_OPERATOR
  "Operator"
 TRAN_QUERY_QCNT_NUMBER
  "Number"
 TRAN_QUERY_QCNT_NUMBER_GT_NAME
  " > "
 TRAN_QUERY_QCNT_NUMBER_LT_NAME
  " < "
 TRAN_QUERY_QCNT_NUMBER_EQ_NAME
  " = "
 TRAN_QUERY_QCNT_NUMBER_GE_NAME
  " >= "
 TRAN_QUERY_QCNT_NUMBER_LE_NAME
  " <= "
 TRAN_QUERY_QCNT_NUMBER_NE_NAME
  " <> "

 TRAN_QUERY_SHOW_NAME
  "Show"
 TRAN_QUERY_SHOW_STEP_TITLE
  "Select the transaction output field to display"
 TRAN_QUERY_SHOW_STEP_TEXT
  "Specifies the transaction output fields to be
   displayed and overrides the default transaction
   output fields."
 TRAN_QUERY_SHOW_CONTROLS_TITLE
  "Options"
 TRAN_QUERY_SHOW_CONTROLS_HELP
  "Option help"
 TRAN_QUERY_SHOW_DEFAULT_NAME
  "Default - None"
 TRAN_QUERY_SHOW_DEFAULT_HELP
  "Show is an optional keyword. Select this to
   prevent SHOW from appearing in your command."
 TRAN_QUERY_SHOW_ALL_NAME
  "All"
 TRAN_QUERY_SHOW_ALL_HELP
  "Selects all fields"
 TRAN_QUERY_SHOW_GLOBAL_NAME
  "Global"
 TRAN_QUERY_SHOW_GLOBAL_HELP
  "This is the help for Show Global."
 TRAN_QUERY_SHOW_LOCAL_NAME
  "Local"
 TRAN_QUERY_SHOW_LOCAL_HELP
  "This is the help for Show Local."
 TRAN_QUERY_SHOW_LIST_NAME
  "Select - List"
 TRAN_QUERY_SHOW_LIST_HELP
  "Select from the list"
 TRAN_QUERY_SHOW_LIST_CLS_NAME
  "Class"
 TRAN_QUERY_SHOW_LIST_CLS_HELP
  "This is the help for Class"
 TRAN_QUERY_SHOW_LIST_CP_NAME
  "CP"
 TRAN_QUERY_SHOW_LIST_CP_HELP
  "Current scheduling priority"
 TRAN_QUERY_SHOW_LIST_LCT_NAME
  "LCT"
 TRAN_QUERY_SHOW_LIST_LCT_HELP
  "Limit Count."
 TRAN_QUERY_SHOW_LIST_LP_NAME
  "LP"
 TRAN_QUERY_SHOW_LIST_LP_HELP
  "Limit scheduling priority"
 TRAN_QUERY_SHOW_LIST_NP_NAME
  "NP"
 TRAN_QUERY_SHOW_LIST_NP_HELP
  "Normal scheduling priority."
 TRAN_QUERY_SHOW_LIST_PARLM_NAME
  "PARLM"
 TRAN_QUERY_SHOW_LIST_PARLM_HELP
  "Parallel processing limit count, which is the maximum number of
   messages that can currently be queued, but not yet processed,
   by each active message region currently scheduled for this
   transaction."
 TRAN_QUERY_SHOW_LIST_PLCT_NAME
  "PLCT"
 TRAN_QUERY_SHOW_LIST_PLCT_HELP
  "Processing limit count"
 TRAN_QUERY_SHOW_LIST_PSBNAME_NAME
  "PSBNAME"
 TRAN_QUERY_SHOW_LIST_PSBNAME_HELP
  "PSB name associated with the transaction."
 TRAN_QUERY_SHOW_LIST_QCNT_NAME
  "QCNT"
 TRAN_QUERY_SHOW_LIST_QCNT_HELP
  "Display the global queue count and the local queue count."
 TRAN_QUERY_SHOW_LIST_RC_NAME
  "RC"
 TRAN_QUERY_SHOW_LIST_RC_HELP
  "Number of regions the transaction is currently scheduled in."
 TRAN_QUERY_SHOW_LIST_SEGNO_NAME
  "SEGNO"
 TRAN_QUERY_SHOW_LIST_SEGNO_HELP
  "Application program output segment limit allowed in message
   queues for each GU call."
 TRAN_QUERY_SHOW_LIST_SEGSZ_NAME
  "SEGSZ"
 TRAN_QUERY_SHOW_LIST_SEGSZ_HELP
  "Application program output segment size limit allowed in the
   message queues for each GU call."
 TRAN_QUERY_SHOW_LIST_STATUS_NAME
  "STATUS"
 TRAN_QUERY_SHOW_LIST_STATUS_HELP
      "Global and local transaction status."
 TRAN_QUERY_ROUTE_NAME
      "Route"
 TRAN_QUERY_ROUTE_STEP_TITLE
      "Specify the systems that will receive this commmand"
 TRAN_QUERY_ROUTE_STEP_TEXT
      "This is the explanation of how to complete this step.
       It includes info on what the terms mean and how to use the
       controls and any available help."
 TRAN_QUERY_ROUTE_CONTROLS_TITLE
      "Modular unit id"
 TRAN_UPDATE_NAME
      "Update"
 TRAN_UPDATE_NAME_NAME
      "Name"
 TRAN_UPDATE_NAME_STEP_TITLE
      "Name transactions to update"
 TRAN_UPDATE_NAME_STEP_TEXT
      "This page lists the names of the transactions that you will
       update. Type a transaction name in the entry field and
       press Enter to add it to the list. You can also select
       previous transactions from the drop-down list and use the
       wildcard (*) character to display all or filter transactions.
       For example, ABC* will update all transactions starting with
       ABC."
 TRAN_UPDATE_NAME_CONTROLS_TITLE
      "Transaction names (*)"
 TRAN_UPDATE_CLASS_NAME
      "Class"
 TRAN_UPDATE_CLASS_STEP_TITLE
      "Specify the class number of transactions to update"
 TRAN_UPDATE_CLASS_STEP_TEXT
      "This page lists the class numbers of the transactions that you
       will update. Type a class number in the entry field and
       press Enter to add it to the list. You can also select
       previous class numbers from the drop-down list."
 TRAN_UPDATE_CLASS_CONTROLS_TITLE
      "Class number"
 TRAN_UPDATE_START_NAME
      "Start"
 TRAN_UPDATE_START_STEP_TITLE
    "Select transaction functions to stop"
 TRAN_UPDATE_START_STEP_TEXT
    "This page lists transaction functions that you can start.
     The start will apply to the transactions that you selected
     in the Name and Class steps. To see a detailed explanation
     of an option, move the cursor to that option."
 TRAN_UPDATE_START_CONTROLS_TITLE
    "Options"
 TRAN_UPDATE_START_CONTROLS_HELP
    "Option help"
 TRAN_UPDATE_START_DEFAULT_NAME
    "Default - None"
 TRAN_UPDATE_START_DEFAULT_HELP
    "This is the default -- do not start any functions"
 TRAN_UPDATE_START_ALL_NAME
    "All"
 TRAN_UPDATE START_ALL_HELP
    "Start all of the transaction functions."
 TRAN_UPDATE START_LIST_NAME
    "Select - List"
 TRAN_UPDATE_START_LIST_HELP
     "Select the start options from the list."
 TRAN_UPDATE_START_LIST_IN_NAME
     "Input"
 TRAN_UPDATE_START_LIST_IN_HELP
     "This is the help for Input."
 TRAN_UPDATE_START_LIST_OUT_NAME
     "Output"
 TRAN_UPDATE_START_LIST_OUT_HELP
     "This is the help for Output"
 TRAN_UPDATE_START_LIST_QUE_NAME
     "Queueing"
 TRAN_UPDATE_START_LIST_QUE_HELP
     "This is the help for Queueing"
 TRAN_UPDATE_START_LIST_SCHED_NAME
     "Scheduling"
 TRAN_UPDATE_START_LIST_SCHED_HELP
     "This is the help for Scheduling"
 TRAN_UPDATE_START_LIST_SPNDQ_NAME
     "Suspend Queue"
 TRAN_UPDATE_START_LIST_SPNDQ_HELP
 "This is the help for Suspend Queue"
 TRAN_UPDATE_START_LIST_TRC_NAME
 "Trace"
 TRAN_UPDATE_S TART_LIST_TRC_HELP
 "This is the help for Trace"
 TRAN_UPDATE_STOP_NAME
 "Stop"
 TRAN_UPDATE_STOP_STEP_TITLE
 "Select transaction functions to stop"
 TRAN_UPDATE_STOP_STEP_TEXT
 "This page lists transaction functions that you can stop.
  The stop will apply to the transactions that you selected
  in the Name and Class steps. To see a detailed explanation
  of an option, move the cursor to that option."
 TRAN_UPDATE_STOP_CONTROLS_TITLE
 "Options"
 TRAN_UPDATE_STOP_CONTROLS_HELP
 "Option help"
 TRAN_UPDATE_STOP_DEFAULT_NAME
 "Default - None"
 TRAN_UPDATE_STOP_DEFAULT_HELP
 "This is the default -- do not stop any functions"
 TRAN_UPDATE_STOP_ALL_NAME
 "All"
 TRAN_UPDATE_STOP_ALL_HELP
 "Stop all of the transaction functions."
 TRAN_UPDATE_STOP_LIST_NAME
 "Select - List"
 TRAN_UPDATE_STOP_LIST_HELP
 "Select the stop options from the list."
 TRAN_UPDATE_STOP_LIST_IN_NAME
 "Input"
 TRAN_UPDATE_STOP_LIST_IN_HELP
 "This is the help for Input"
 TRAN_UPDATE_STOP_LIST_OUT_NAME
 "Output"
 TRAN_UPDATE_STOP_LIST_OUT_HELP
 "This is the help for Output"
 TRAN_UPDATE_STOP_LIST_QUE_NAME
 "Queueing"
 TRAN_UPDATE_STOP_LIST_QUE_HELP
  "This is the help for Queueing"
 TRAN_UPDATE_STOP_LIST_SCHED_NAME
  "Scheduling"
 TRAN_UPDATE_STOP_LIST_SHCED_HELP
  "This is the help for Scheduling"
 TRAN_UPDATE_STOP_LIST_TRC_NAME
 "Trace"
 TRAN_UPDATE_STOP_LIST_TRC_HELP
  "This is the help for Trace"
 TRAN_UPDATE_SET_NAME
 "Set"
 TRAN_UPDATE_SET_STEP_TITLE
 "Specify the transaction attributes you want to change"
 TRAN_UPDATE_SET_STEP_TEXT
 "This page lists transaction attributes that you can change.
  Select the attribute, then type the new value in the entry
  field. To see a detailed explanation
  of an attribute, move the cursor to that option."
 TRAN_UPDATE_SET_CONTROLS_TITLE
 "Options"
 TRAN_UPDATE_SET_CONTROLS_HELP
 "Option help"
 TRAN_UPDATE_SET_LIST_CLASS_NAME
 "Class"
 TRAN_UPDATE_SET_LIST_CLASS_HELP
 "This is the help for Class"
 TRAN_UPDATE_SET_LIST_CPRI_NAME
 "Current Priority"
 TRAN_UPDATE_SET_LIST_CPRI_HELP
 "This is the help for Current Priority"
 TRAN_UPDATE_SET_LIST_LMCT_NAME
 "Limit Count"
 TRAN_UPDATE_SET_LIST_LMCT_HELP
 "This is the help for Limit Count"
 TRAN_UPDATE_SET_LIST_LPRI_NAME
 "Limit Priority"
 TRAN_UPDATE_SET_LIST_LPRI_HELP
 "This is the help for Limit Priority"
 TRAN_UPDATE_SET_LIST_MAXRGNS_NAME
 "Max Regions"
 TRAN_UPDATE_SET_LIST_MAXRGNS_HELP
  "This is the help for Max Regions"
 TRAN_UPDATE_SET_LIST_NPRI_NAME
  "Normal Priority"
 TRAN_UPDATE_SET_LIST_NPRI_HELP
 "This is the help for Normal Priority"
 TRAN_UPDATE_SET_LIST_PARLIM_NAME
 "Parallel Limit Count"
 TRAN_UPDATE_SET_LIST_PARLIM_HELP
 "This is the help for Parallel Limit Count"
 TRAN_UPDATE_SET_LIST_PLMCT_NAME
 "Processing Limit Count"
 TRAN_UPDATE_SET_LIST_PLMCT_HELP
 "This is the help for Processing Limit Count"
 TRAN_UPDATE_SET_LIST_SEGNO_NAME
 "Segment Number"
 TRAN_UPDATE_SET_LIST_SEGNO_HELP
 "This is the help for Segment Number"
 TRAN_UPDATE_SET_LIST_SEGSIZE_NAME
 "Segment Size"
 TRAN_UPDATE_SET_LIST_SEGSIZE_HELP
 "This is the help for Segment Size"
 TRAN_UPDATE_ROUTE_NAME
 "Route"
 TRAN_UPDATE_ROUTE_STEP_TITLE
 "Specify the systems that will receive this commmand"
 TRAN_UPDATE_ROUTE_STEP_TEXT
 "This is the explanation of how to complete this step.
  It includes info on what the terms mean and how to use the
  controls and any available help."
 TRAN_UPDATE_ROUTE_CONTROLS_TITLE
 "Modular unit id"
```

## Claims

1. A method for generating a graphical user interface from a command syntax, for managing at least one computer system, comprising:
(a) processing at least one extensible Markup Language (XML) file (112) at a user interface program (114) executed by the at least one computer system, wherein the XML file (112) represents a command syntax for managing the at least one computer system (108); and
(b) generating at least one dialog from the XML file (112) for display to an operator, wherein the at least one dialog is used to create at least one command in the user interface program (114) for identifying the action to be taken by VERB - The verb is the first element and identifies the action to be taken. The verb can be abbreviated the at least one computer system (108).

2. The method of claim 1, wherein the XML files (112) are selected from a group comprising an XML document file, XML schema file, and text description file.

3. The method of claim 2, wherein the XML document, XML schema, and text description file are maintained on a server (106) and are downloaded to the computer (104) as required.

4. The method of claim 3, wherein the XML document, XML schema, and text description file are modified on the server (106) as the command syntax changes.

5. The method of claim 2, 3 or 4, wherein the XML document, XML schema, and text description file represent a latest version of the command syntax.

6. The method of any of claims 2 to 5, wherein the user interface program (114) processes the XML document using the XML schema to identify resource types, verbs, and keywords therein.

7. The method of any of claims 2 to 6, wherein the text description file provides at least one text description that is used by the user interface program (114) to construct the at least one dialog.

8. The method of any of claims 2 to 7, wherein the text description file comprises at least one text description that is represented by tags that comprise concatenations of nested XML tag names in the XML document.

9. The method of any of claims 2 to 8, wherein the XML document comprises one or more tags selected from a group comprising:
a root tag that is a global tag that provides a wrapper for all other tags,
a resource tag that is used to define a resource,
a verb tag that is used to define a verb,
a keyword tag that is used to define a keyword,
a list tag that is used within the keyword tag to define a list of options,
a compare tag that is used within the keyword tag to define a comparison between an operator and a variable,
an option tag that is used within the list tag to define optional selections for a keyword,
a variable tag that is used within the keyword and list tags to define a variable, and
an operator tag that is used within the compare tag to define an operator for a list of operators.

10. The method of any preceding claim, wherein the at least one dialog comprises a Wizard for use by the operator in generating commands for the at least one computer system (108).

11. The method of claim 10, wherein the Wizard displays a step-by-step series of dialogs for guiding the operator in the use of the command syntax.

12. The method of any preceding claim, wherein the commands are submitted to multiple computer systems.

13. The method of any preceding claim, wherein the user interface program is not sensitive to an individual format of the command syntax that is used to manage the at least one computer system.

14. A computer program product comprising computer program code stored on a computer readable storage medium, which when executed on a computer, performs the method of any preceding claim.

15. A system for generating a graphical user interface from a command syntax for managing at least one computer system, comprising:
(a) a computer; and
(b) a user interface program (114), executed by the computer, for processing at least one extensible Markup Language (XML) file (112) at a user interface program executed by the at least one computer system, wherein the XML file represents a command syntax for managing the at least one computer system (108), and for generating at least one dialog from the XML file for display to an operator, wherein the at least one dialog is used to create at least one command in the user interface program (114) for identifying the action to be taken by VERB - The verb is the first element and identifies the action to be taken. The verb can be abbreviated the at least one computer system.

## Revendications

1. Procédé de génération d'une interface graphique d'utilisateur à partir d'une syntaxe de commandes, destiné à gérer au moins un système informatique, comprenant :
(a) le traitement d'au moins un fichier en langage de balisage extensible (XML) (112) au niveau d'un programme d'interface d'utilisateur (114) exécuté par le au moins un système informatique, où le fichier XML (112) représente une syntaxe de commandes pour gérer le au moins un système informatique (108), et
(b) la génération d'au moins un dialogue à partir du fichier XML (112) en vue de l'affichage pour un opérateur, où le au moins un dialogue est utilisé pour créer au moins une commande dans le programme d'interface d'utilisateur (114) pour identifier l'action que le au moins un système informatique (108) doit entreprendre.

2. Procédé selon la revendication 1, dans lequel les fichiers XML (112) sont sélectionnés à partir d'un groupe comprenant un fichier de document XML, un fichier XML schema et un fichier de description textuelle.

3. Procédé selon la revendication 2, dans lequel le fichier de document XML, le fichier XML schema et le fichier de description textuelle sont conservés sur un serveur (106) et sont téléchargés vers l'ordinateur (104) selon ce qui est requis.

4. Procédé selon la revendication 3, dans lequel le fichier de document XML, le fichier XML schema et le fichier de description textuelle sont modifiés sur le serveur (106) lorsque la syntaxe de commandes change.

5. Procédé selon la revendication 2, 3 ou 4, dans lequel le fichier de document XML, le fichier XML schema et le fichier de description textuelle représente la version la plus récente de la syntaxe de commandes.

6. Procédé selon l'une quelconque des revendications 2 à 5, dans lequel le programme d'interface d'utilisateur (114) traite le document XML en utilisant le schéma XML schema pour identifier les types de ressources, les verbes et les mots-clés dans celui-ci.

7. Procédé selon l'une quelconque des revendications 2 à 6, dans lequel le fichier de description textuelle fournit au moins une description textuelle qui est utilisée par le programme d'interface d'utilisateur (114) pour construire le au moins un dialogue.

8. Procédé selon l'une quelconque des revendications 2 à 7, dans lequel le fichier de description textuelle comprend au moins une description textuelle qui est représentée par des balises qui comprennent des concaténations de noms de balises XML imbriqués dans le document XML.

9. Procédé selon l'une quelconque des revendications 2 à 8, dans lequel le document XML comprend une ou plusieurs balises sélectionnées à partir d'un groupe comprenant :
une balise racine qui est une balise globale qui fournit un emballage pour toutes les autres balises,
une balise de ressource qui est utilisée pour définir une ressource,
une balise de verbe qui est utilisée pour définir un verbe,
une balise de mot-clé qui est utilisée pour définir un mot-clé,
une balise de liste qui est utilisée à l'intérieur de la balise de mot-clé pour définir une liste d'options,
une balise de comparaison qui est utilisée à l'intérieur de la balise de mot-clé pour définir une comparaison entre un opérateur et une variable,
une balise d'option qui est utilisée à l'intérieur de la balise de liste pour définir des sélections optionnelles pour un mot-clé,
une balise de variable qui est utilisée à l'intérieur des balises de mot-clé et de liste pour définir une variable, et
une balise d'opérateur qui est utilisée à l'intérieur de la balise de comparaison pour définir un opérateur pour une liste d'opérateurs.

10. Procédé selon l'une quelconque des revendications précédentes, dans lequel le au moins un dialogue comprend un Assistant devant être utilisé par l'opérateur lors de la génération des commandes pour le au moins un système informatique (108).

11. Procédé selon la revendication 10, dans lequel l'Assistant affiche une série étape par étape de dialogues destinée à guider l'opérateur lors de l'utilisation de la syntaxe de commandes.

12. Procédé selon l'une quelconque des revendications précédentes, dans lequel les commandes sont soumises à de multiples systèmes informatiques.

13. Procédé selon l'une quelconque des revendications précédentes, dans lequel le programme d'interface d'utilisateur n'est pas sensible à un format individuel de la syntaxe de commandes qui est utilisée pour gérer le au moins un système informatique.

14. Produit de programme informatique comprenant un code de programme informatique mémorisé sur un support de mémorisation lisible par un ordinateur, qui, lorsqu'il est exécuté sur un ordinateur, exécute le procédé selon l'une quelconque des revendications précédentes.

15. Système destiné à générer une interface graphique d'utilisateur à partir d'une syntaxe de commandes pour gérer au moins un système informatique, comprenant :
(a) un ordinateur, et
(b) un programme d'interface d'utilisateur (114), exécuté par l'ordinateur, destiné à traiter au moins un fichier en langage de balisage extensible (XML) (112) au niveau d'un programme d'interface d'utilisateur exécuté par le au moins un système informatique, où le fichier XML représente une syntaxe de commandes destinée à gérer le au moins un système informatique (108), et destiné à générer au moins un dialogue à partir du fichier XML en vue de l'affichage pour un opérateur, où le au moins un dialogue est utilisé pour créer au moins une commande dans le programme d'interface d'utilisateur (114) pour identifier l'action que le au moins un système informatique doit entreprendre.

## Patentansprüche

1. Verfahren zum Erzeugen einer grafischen Benutzeroberfläche aus einer Befehlssyntax, um mindestens ein Rechnersystem zu steuern, wobei das Verfahren Folgendes umfasst:
(a) Verarbeiten von mindestens einer in der erweiterten Auszeichnungssprache eXtensible Markup Language (XML) geschriebenen Datei (112) in einem Benutzerschnittstellenprogramm (114), das von dem mindestens einen Rechnersystem ausgeführt wird, wobei die XML-Datei (112) eine Befehlssyntax zur Steuerung des mindestens einen Rechnersystems (108) darstellt; und
(b) Erzeugen von mindestens einem Dialog aus der XML-Datei (112), um ihn einem Bediener anzuzeigen, wobei der mindestens eine Dialog zur Erzeugung von mindestens einem Befehl in dem Benutzerschnittstellenprogramm (114) dient, um die von dem mindestens einen Rechnersystem (108) durchzuführende Aktion (Beschreibung, Seite 5, Zeilen 26 bis 27) anzugeben.

2. Verfahren nach Anspruch 1, wobei die XML-Dateien (112) aus einer Gruppe ausgewählt werden, die eine XML-Dokumentdatei, eine XML-Schemadatei und eine Textbeschreibungsdatei umfasst.

3. Verfahren nach Anspruch 2, wobei das XML-Dokument, das XML-Schema und die Textbeschreibungsdatei auf einem Server (106) hinterlegt und nach Bedarf auf den Rechner (104) heruntergeladen werden.

4. Verfahren nach Anspruch 3, wobei das XML-Dokument, das XML-Schema und die Textbeschreibungsdatei auf dem Server (106) geändert werden, wenn sich die Befehlssyntax ändert.

5. Verfahren nach Anspruch 2, 3 oder 4, wobei das XML-Dokument, das XML-Schema und die Textbeschreibungsdatei eine neueste Version der Befehlssyntax darstellen.

6. Verfahren nach einem der Ansprüche 2 bis 5, wobei das Benutzerschnittstellenprogramm (114) das XML-Dokument mit Hilfe des XML-Schemas verarbeitet, um darin enthaltene Ressourcentypen, Verben und Schlüsselwörter zu ermitteln.

7. Verfahren nach einem der Ansprüche 2 bis 6, wobei die Textbeschreibungsdatei mindestens eine Textbeschreibung bereitstellt, die von dem Benutzerschnittstellenprogramm (114) zum Aufbau des mindestens einen Dialogs verwendet wird.

8. Verfahren nach einem der Ansprüche 2 bis 7, wobei die Textbeschreibungsdatei mindestens eine Textbeschreibung umfasst, die von Auszeichnungselementen dargestellt wird, welche Verknüpfungen von verschachtelten Namen von XML-Auszeichnungselementen in dem XML-Dokument umfassen.

9. Verfahren nach einem der Ansprüche 2 bis 8, wobei das XML-Dokument ein oder mehrere Auszeichnungselemente umfasst, die aus einer Gruppe ausgewählt werden, welche Folgendes umfasst:
ein Stamm-Auszeichnungselement, bei dem es sich um ein globales Auszeichnungselement handelt, das eine Hülle für alle anderen Auszeichnungselemente bereitstellt,
ein Ressourcen-Auszeichnungselement, das zur Angabe einer Ressource verwendet wird,
ein Verb-Auszeichnungselement, das zur Angabe eines Verbs verwendet wird,
ein Schlüsselwort-Auszeichnungselement, das zur Angabe eines Schlüsselworts verwendet wird,
ein Listen-Auszeichnungselement, das innerhalb des Schlüsselwort-Auszeichnungselements zur Angabe einer Liste mit Optionen verwendet wird,
ein Vergleichs-Auszeichnungselement, das innerhalb des Schlüsselwort-Auszeichnungselements zur Angabe eines Vergleichs zwischen einem Operator und einer Variablen verwendet wird,
ein Options-Auszeichnungselement, das innerhalb des Listen-Auszeichnungselements zur Angabe von optionalen Auswahlmöglichkeiten für ein Schlüsselwort verwendet wird,
ein Variablen-Auszeichnungselement, das innerhalb des Schlüsselwort-Auszeichnungselements und des Listen-Auszeichnungselements zur Angabe einer Variablen verwendet wird, und
ein Operator-Auszeichnungselement, das innerhalb des Vergleichs-Auszeichnungselements zur Angabe eines Operators für eine Liste mit Operatoren verwendet wird.

10. Verfahren nach einem der vorhergehenden Ansprüche, wobei der mindestens eine Dialog einen Assistenten umfasst, der von dem Bediener bei der Erzeugung von Befehlen für das mindestens eine Rechnersystem (108) in Anspruch genommen werden kann.

11. Verfahren nach Anspruch 10, wobei der Assistent eine in Einzelschritte gegliederte Reihe von Dialogen anzeigt, um den Bediener bei der Verwendung der Befehlssyntax anzuleiten.

12. Verfahren nach einem der vorhergehenden Ansprüche, wobei die Befehle an mehrere Rechnersysteme übergeben werden.

13. Verfahren nach einem der vorhergehenden Ansprüche, wobei das Benutzerschnittstellenprogramm nicht von einem bestimmten Format der Befehlssyntaxabhängig ist, die zur Steuerung des mindestens einen Rechnersystems verwendet wird.

14. Rechnerprogrammprodukt, das Rechnerprogramm-Code umfasst, der auf einem rechnerlesbaren Speichermedium gespeichert ist, wobei das Rechnerprogrammprodukt, wenn es auf einem Rechner ausgeführt wird, das Verfahren nach einem der vorhergehenden Ansprüche durchführt.

15. System zum Erzeugen einer grafischen Benutzeroberfläche aus einer Befehlssyntax, um mindestens ein Rechnersystem zu steuern, wobei das System Folgendes umfasst:
(a) einen Rechner; und
(b) ein Benutzerschnittstellenprogramm (114), das von dem Rechner ausgeführt wird, um mindestens eine in der erweiterten Auszeichnungssprache eXtensible Markup Language (XML) geschriebene Datei (112) in einem Benutzerschnittstellenprogramm zu verarbeiten, das von dem mindestens einen Rechnersystem ausgeführt wird, wobei die XML-Datei eine Befehlssyntax zur Steuerung des mindestens einen Rechnersystems (108) darstellt, und um mindestens einen Dialog aus der XML-Datei zu erzeugen, um ihn einem Bediener anzuzeigen, wobei der mindestens eine Dialog zur Erzeugung von mindestens einem Befehl in dem Benutzerschnittstellenprogramm (114) dient, um die von dem mindestens einen Rechnersystem durchzuführende Aktion (Beschreibung, Seite 5, Zeilen 26 bis 27) anzugeben.
